# EUROPEAN PATENT APPLICATION

(11) **EP 1 203 937 A1**
(43) Date of publication of application: **08.05.2002**
(21) Application number: 00124116.5
(22) Date of filing: 06.11.2000
(51) Int. Cl.: G01L 19/00

(54) **Sensor unit**

(71) Applicant: SKG ITALIANA SPA, 43040 Scarzara (Parma) (IT)
(72) Inventor: Bernini, Michele, 43100 Parma (IT)
(74) Representative: Grünecker, Kinkeldey, Stockmair & Schwanhäusser Anwaltssozietät

(57) **Abstract**

A sensor unit S for water heating systems, particularly for water boilers, is designed with a single housing H as a combined relative pressure and temperature sensor and has a ceramic support element C carrying an electronic circuit E including separate circuit zones E1, E2 for detecting the pressure and the temperature of the water, said support element including an active functional element M and being directly contacted by the water. The water contact area of said ceramic support element is separated from said electronic circuit E by a sealing 9 in said housing H.

## Description

The invention relates to a sensor unit according to the preamble part of claim 1.

Water heating systems or water boilers conventionally are equipped with a manometer, a thermometer, a heating sensor like a NTC-sensor and a mechanical pressure sensor for monitoring and controlling the function. These are separate components mounted at different locations and need relatively high technical effort and a complicated cabling in order to reliably utilise the different information.

It is an object of the invention to create a sensor unit which can be manufactured with fair costs, has multiple functions in a water heating system or a water boiler, has a reduced mounting requirement and is able to generate precise information reliably and rapidly.

Said object can be achieved by the features of claim 1.

Said sensor unit allows simultaneous detection of the water pressure and temperature variations or temperature values. The ceramic support element is in direct contact with the water and comprises an active functional element responding by deformation to water pressure variations. The electronic circuit provides information on the water pressure and the water temperature rapidly and precisely, thanks to the excellent response behaviour of the ceramic support element to temperature and its sensitivity to pressure variations. The sensor unit can be mounted in a simple fashion, e.g. on a water boiler. The sensor unit is characterised by a small hysteresis and for that reason is an ideal component for heating appliances, particularly boilers. The sensor unit replaces four components as needed in the past, namely the manometer, the thermometer, the heating sensor and the mechanical pressure sensor. This leads to a significant cost reduction.

At least one NTC-sensor (temperature sensitive element operating with a negative temperature coefficient) and/or SMD-chip-thermistor (a temperature sensitive, electronic member operating with positive or negative temperature coefficient and being mounted according to the SMD-technique, i.e. at the surface of ceramic support element) are capable of generating clear signal variations between e.g. 0 and 4 volts in a relatively short response times of less than or equal to 3 ms within a temperature range of e.g. - 40° to 140°C in a reliable fashion. Such components, furthermore, are capable of maintaining a drift-temperature-zero point of ± 0.05% FS/°C at a drift temperature sensitivity of ± 0.01% FS/°C in connection with a relatively high preciseness (linearity, hysteresis, repeatability) of ± 1% FS and a zero point tolerance of only ± 1.5% FS. The electronic circuit zone employed to detect the pressure of the water by means of the active functional element of the ceramic support element should at least be equipped with a resistor, at least one capacitor and at least one microprocessor in order to generate precise signals within a pressure range of e.g. 0 to about 6 bar, while said sensor unit can stand an upper pressure limit of about 12 bar. The ceramic support element offers the advantage of allowing relatively temperature independent pressure measurements.

Alternatively, at least for detecting the water pressure an Application Specific Integrated Circuit (ASIC) can be used instead of traditional electronics. Said equipment assures that the sensor compensates for dimensions in terms of changing with the temperature and linearity for maintaining the output characteristic within predetermined limits. Gauging is made by writing parameters into an integrated memory.

Expediently the active working element of the ceramic support element may be an integrated membrane which is deformed by the water pressure and which is scanned by electronic members, e.g. by strain gauge elements connected to a Wheatstone bridge. Said electronic members expediently are provided at the dry side of said support element. The electric circuit compensates for variations of the Wheatstone bridge caused by temperature variations. Hysteresis cycling and linearity <0.8 F.S can be achieved with an output at zero bar of about 200 mV ± 1.5 F.S.

It is of advantage when the ceramic support element has the shape of a circular disk containing an integrated and circular membrane in its central region. The material of the ceramic support element may be aluminium oxide, e.g. with a purity of about 96%. The outer diameter of the support element can be about 26 mm and its thickness about 6 mm.

The ceramic support element is secured in its edge region and also is sealed in this region such that no water can reach the electronic circuitry. The inner portion of the support element remains moveable in relation to the fixation of the support element, particularly the limited inner portion defining said membrane and which is actuated by the water pressure. The ceramic support element serves as the carrier for the electronic circuit zones. Expediently a temperature sensitive electronic member is provided outside the limited inner portion at or within the ceramic support element which member is used to detect the temperature of the water. In this case, the ceramic material of the support element serves to transfer the temperature towards said member.

In view to manufacturing it is of advantage to integrate the ceramic support element already equipped with the electronic circuit as a prefabricated chip body during assembly or when injection moulding the housing of the sensor unit.

The sealing can be at least one sealing frame or O-ring made of EPDM plastic material because said material maintains its excellent sealing capabilities within a relatively wide temperature and pressure ranges.

The housing of the sensor unit expediently is, e.g., a unitary or manifold plastic material injection form part consisting of an upper part and a lower part.

For specific conditions the housing can be made at least in part of brass.

The ceramic support element expediently is fixed within a cavity of the housing. The inner channel leads to said cavity in order to actuate the support eiement with the pressure and the temperature of the water. The securing ring or support element retainer of the housing holds the support element against movement out of the cavity.

Expediently the inner channel opens funnel-shaped towards the region of the support element which defines the membrane integrated into the support element.

An embodiment of the subject of the invention is explained with the help of the drawing. In the drawing is:
- Fig. 1: a schematic partial longitudinal section of a sensor unit, and
- Fig. 2: a top view of the sensor unit.

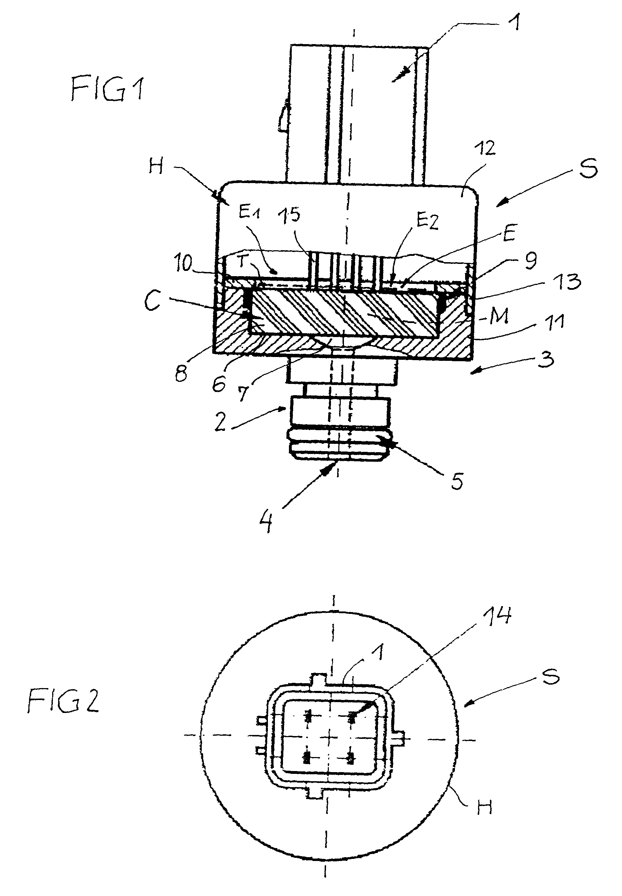

A sensor unit S, particularly for a water heating system or for a water boiler (not shown), respectively, has in Figs 1 and 2 a housing H made of plastic material or brass in which a disk-shaped ceramic support element C is received at the upper surface of which an electronic circuit E is placed such that support element C serves as a carrier of said electronic circuit E. Expediently the ceramic support element C equipped with the electronic circuit E is a prefabricated chip body 8, e.g. having an outer diameter of about 26 mm and a thickness of about 6 mm. Into said ceramic support element C as an active functional element a membrane M is integrated, e.g. as a central and round portion at the centre of support element C.

The housing may be a unitary injection moulded form part or can be combined of two injection mould form parts, as shown for the embodiment with an upper part 12 and a lower part 11. Upper part 12 is formed with a shaft-like connector socket 1 in the inner region of which connecting contacts 14 (Fig. 2) are provided. In the shown embodiment there are four contacts 14 at the ends of four connecting lines 15 extending upwardly from the electronic circuit 4 (power supply, ground, connector for pressure signal and connector for temperature signal).

A water introducing fitting to is unitary formed at lower part 11 and carries at least one O-ring 5 for sealing purposes and has an inner channel 4 extending into a funnel-shaped portion 7 at the bottom of cavity 6 formed in lower part 11, preferably in a central position. The ceramic support element C is received within cavity 6 and is held by a sealing 9 at its outer edge (the sealing may be a sealing frame or O-ring made of EDPM plastic material), such that the lower side of said support element directly contacted by the water is sealed against the electronic circuit E provided at the upper side of said support element. A fixing ring or retainer 10 of housing H is extending from outside beyond the edge of said cavity 6 and also the outer edge of support element C in order to secure it within cavity 6.

Said electronic circuit has two separate circuit zones E1, E2. Circuit zone E1 serves to measure the temperature, e.g. by means of a NTC-sensor and/or a MSD-chip- thermistor T. The other circuit zone E2 serves to measure the water pressure by scanning the active working element, i.e. the membrane M, integrated into support element C. In the shown embodiment upper and lower parts 11, 12 are interconnected in a region of a skirt 13. In case of a unitary design of housing H upper and lower parts 11, 12 would be interconnected unitarily.

At least one resistor, at least one capacitor and at least one microprocessor (not shown in detail) are provided within circuit zone E2, which as such may be a traditional electronic circuit. Even circuit zone E1 should have a microprocessor. Expediently there are several capacitors and a group of resistors like strain gauge elements connected to a Wheatstone bridge provided in circuit zone E2 on the dry surface of support element C. The electric conductors and the electronic components of the electronic circuit E are distributed on the surface of support element C, the central region of which is defining said membrane M as the active functional element in co-action with e.g. the strain gauge elements. Gauging or calibrating is carried out by writing parameters into integrated memories

Instead, circuit zone E2 or even also circuit zone E1 could be designed as an Application Specific Integrated Circuit (ASIC). Then the sensor could compensate for dimension variations in terms of changing with temperature and linearity for maintaining the output characteristics within predetermined limits.

Lower part 11 has further not shown parts of a sensor fixation 3, e.g. a threaded projection or a holder for a fixing screw.

The sensor unit S being a combined temperature and pressure sensor for the water brought through inner channel 4 to support element C is inserted into a corresponding mounting facility, e.g. at a hot water boiler, by its water connecting fitting 2 and is fixed into position. A connector inserted into connector socket 1 is snapped in position in order to connect the sensor unit with the control system or the monitoring system of the water heating system or the boiler.

## Claims

1. Sensor unit for a water heating system, particularly for water boilers, **characterised in that** said sensor unit (S) is designed with a single housing (H) as a combined relative pressure and temperature sensor and has a ceramic support element (C) carrying an electronic circuit (E) including separate circuit zones (E1, E2) for detecting the pressure and the temperature of the water, said support element including an active functional element (M) and being directly contactable by the water, and that the water contact area of said ceramic support element (C) is separated from said electronic circuit (E) by a sealing (9)

2. Sensor unit as in claim 1, **characterised in that** said electronic circuit (E) at said ceramic support element (C) include an NTC-sensor and/or a SMD-chip- thermistor (T).

3. Sensor unit as in claims 1 or 2, **characterised in that** said electronic circuit zone (E2) for detecting the pressure of the water by means of said active functional element (M) of said ceramic support element (C) includes at least one resistor, preferably several strain gauge elements, at least one capacitor and a microprocessor, and that in the other electronic circuit zone (E1) for detecting the temperature of the water the NTC-sensor and/or SMD-chip- thermistor (T) is provided.

4. Sensor unit as in claims 1 or 2, **characterised in that** at least said electronic circuit zone (E2) for detecting the pressure of the water comprises an Application Specific Integrated Circuit (ASIC)

5. Sensor unit as in claims 3 or 4, **characterised in that** said electronic circuit zone (E2) contains several strain gauge elements and a Wheatstone bridge at the surface of said ceramic support element (C).

6. Sensor unit as in claim 1, **characterised in that** the active functional element (M) of said ceramic support element (C) is an integrated membrane.

7. Sensor unit as in claim 5, **characterised in that** said ceramic support element (C) has the shape of a circular disk and that said membrane (M) at least substantially is formed in the central region of said support element with circular shape.

8. Sensor unit as in at least one of the preceding claims, **characterised in that** said disk-shaped ceramic support element (C) is secured at its outer edge within housing (H), forms a carrier of the electronic circuit (E) and is actuated at its lower side by the pressure and the temperature of the water, has a limited inner portion defining a pressure actuable membrane (M), and that a temperature sensitive electronic member (T) is placed outside of said restricted inner portion at or within said ceramic support element (C).

9. Sensor unit as in at least one of the preceding claims, **characterised in that** said ceramic support element (C) equipped with said electronic circuit (E) is a prefabricated chip body.

10. Sensor unit as in claim 1, **characterised in that** said sealing (9) is at least one sealing frame or O-ring made of EPDM plastic material compressed between said housing (H) and the outer edge of said ceramic support element (C).

11. Sensor unit as in claim 1, **characterised in that** said housing (H) consists of a plastic material upper part (12) connected with a plastic material lower part (11) in a sealing fashion, particularly in the form of an injection moulded form part, that at said upper part (12) a shaft-like connector socket (1) is provided for electrical connecting contacts (14), and that at said lower part (11) an integrated hollow water connecting fitting (2) and at least a part of a sensor fixation (3) are provided.

12. Sensor unit as in claim 1, **characterised in that** said housing (H) at least in part consists of brass.

13. Sensor unit as in claim 1, **characterised in that** said ceramic support element (C) is secured into a cavity (6) of said lower part (11) to which cavity (6) an inner channel (4) of said water connecting fitting (2) is leading, that the sealing (9) is placed within a wall region of said cavity (6) and that a fixation ring or retainer (10) of said housing (H) extends from outside beyond said wall region of said cavity (6) and said upper side of said ceramic support element (C).

14. Sensor unit as in claim 13, **characterised in that** said inner channel (4) has a funnel-shaped diverging mouth (7) opposite to at the lower side of the membrane (M) integrated into said ceramic support element (C) fixed within said cavity (6).
